# EUROPEAN PATENT APPLICATION

(11) **EP 4 546 837 A1**
(43) Date of publication of application: **30.04.2025**
(21) Application number: 22947297.2
(22) Date of filing: 22.06.2022
(51) Int. Cl.: H04W 12/03

(54) **DIRECT COMMUNICATION METHOD AND APPARATUS IN LOCALIZATION SERVICE**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2022/100579
(87) International publication number: WO 2023/245520

(57) **Abstract**

Disclosed in embodiments of the present disclosure is a direct communication method in a localization service, which can be applied to the technical field of communications. The method executed by a first terminal device comprises: in response to determining to share a unicast link communication root key K_{NRP} with a second terminal device, sending a direct communication request message to the second terminal device, the direct communication request message comprising information used for generating a security context for a localization service. Therefore, the second terminal device can generate the security context for the localization service according to a security context generation mechanism, so that the localization service can be subjected to reliable security protection between the first terminal device and the second terminal device on the basis of reusing an existing PC5 direct communication link.

## Description

### TECHNICAL FIELD

The disclosure relates to the field of communication technologies, and in particular, to a direct communication method and device for a positioning service.

### BACKGROUND

For the enhanced 5G communication system architecture that supports ranging ranking or sidelink (SL) positioning, how to securely protect the ranging or sidelink positioning process is currently an urgent problem to be solved.

### SUMMARY

Embodiments of the present disclosure provide a direct communication method and device for a positioning service.

In a first aspect, embodiments of the present disclosure provide a direct communication method for a positioning service. The method is performed by a first terminal device and the method includes: in response to determining sharing a unicast link communication root key K_{NRP} with a second terminal device, sending a direct communication request message to the second terminal device, wherein the direct communication request message includes information for generating a security context for the positioning service.

In this disclosure, when the first terminal device determines to initiate a ranging or sidelink positioning service with the second terminal device, if there is already a PC5 direct communication link between it and the second terminal device, it can directly send the information used to generate the security context for the positioning service to the second terminal device, so that the second terminal device can generate the security context for the positioning service based on the security context generation mechanism, thereby achieving reliable security protection for the positioning service between the first terminal device and the second terminal device by reusing the existing PC5 direct communication link.

In a second aspect, embodiments of the present disclosure provide a direct communication method for a positioning service. The method is performed by a second terminal device, and the method includes: receiving a direct communication request message sent by a first terminal device, wherein the direct communication request message is sent by the first terminal device upon determining sharing a unicast link communication root key K_{NRP} with the second terminal device, and the direct communication request message includes information for generating a security context for the positioning service.

In this disclosure, the second terminal device can generate the key for security protection the positioning service upon receiving the information for generating security context of the positioning service sent by the first terminal device. Thus, reliable security protection for the positioning service can be achieved between the first terminal device and the second terminal device by reusing the existing PC5 direct communication link.

In a third aspect, embodiments of the present disclosure provide a communication device. The device includes:
a transceiver module, configured to sending a direct communication request message to a second terminal device, in response to determining sharing a unicast link communication root key K_{NRP} with the second terminal device, wherein the direct communication request message includes information for generating a security context for the positioning service.

In a fourth aspect, embodiments of the present disclosure provide a communication device. The device includes:
a transceiver module, configured to receive a direct communication request message sent by a first terminal device, wherein the direct communication request message is sent by the first terminal device upon determining sharing a unicast link communication root key K_{NRP} with the second terminal device, and the direct communication request message includes information for generating a security context for the positioning service.

In a fifth aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In a sixth aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a seventh aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the first aspect.

In an eighth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the second aspect.

In a nineth aspect, embodiments of the present disclosure provide a direct communication system for a positioning service. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect.

In a tenth aspect, embodiments of the present disclosure provide a computer readable storage medium, configured to store instructions used by the above terminal device, which when executed, cause the terminal device to implement the method described in the first aspect.

In an eleventh aspect, embodiments of the present disclosure provide a computer readable storage medium, configured to store instructions used by the above terminal device, which when executed, cause the terminal device to implement the method described in the second aspect.

In a twelfth aspect, the present disclosure further provides a computer program product including a computer program that, when run on a computer, causes the computer to perform the method described in the first aspect.

In a thirteenth aspect, the present disclosure further provides a computer program product including a computer program that, when run on a computer, causes the computer to perform the method described in the second aspect.

In a fourteenth aspect, the present disclosure provides a chip system. The chip system includes at least one processor and an interface for supporting the terminal device to implement the functions involved in the first aspect, such as determining or processing at least one of the data or information involved in the above method. In one possible design, the chip system further includes a memory for storing necessary computer programs and data for the terminal device. This chip system can be composed of chips or include chips and other discrete components.

In a fifteenth aspect, the present disclosure provides a chip system. The chip system includes at least one processor and an interface for supporting the terminal device to implement the functions involved in the second aspect, such as determining or processing at least one of the data or information involved in the above method. In one possible design, the chip system further includes a memory for storing necessary computer programs and data for the terminal device. This chip system can be composed of chips or include chips and other discrete components.

In a sixteenth aspect, the present disclosure provides a computer program which, when run a computer, causes the computer to implement the method described in the first aspect.

In a seventeenth aspect, the present disclosure provides a computer program which, when run a computer, causes the computer to implement the method described in the first aspect.

### BRIEF DESCRIPTION OF THE DRAWINGS

In order to provide a clearer explanation of the technical solution in embodiments of the present disclosure or background technology, the accompanying drawings required for use in embodiments of the present disclosure or background technology will be described below.
Fig. 1 is a schematic diagram of an architecture of a communication system provided in an embodiment of the present disclosure.
Fig. 2 is a schematic flowchart of a direct communication method for a positioning service provided in an embodiment of the present disclosure.
Fig. 3 is a schematic flowchart of a direct communication method for a positioning service provided in another embodiment of the present disclosure.
Fig. 4 is a schematic flowchart of a direct communication method for a positioning service provided in another embodiment of the present disclosure.
Fig. 5 is a schematic flowchart of a direct communication method for a positioning service provided in another embodiment of the present disclosure.
Fig. 5a is a schematic diagram of a relationship between various keys in a security context.
Fig. 6 is a schematic flowchart of a direct communication method for a positioning service provided in yet another embodiment of the present disclosure.
Fig. 7 is a schematic flowchart of a direct communication method for a positioning service provided in yet another embodiment of the present disclosure.
Fig. 8 is a schematic flowchart of a direct communication method for a positioning service provided in yet another embodiment of the present disclosure.
Fig. 9 is a schematic flowchart of a direct communication method for a positioning service provided in yet another embodiment of the present disclosure.
Fig. 10 is a schematic flowchart of a direct communication method for a positioning service provided in yet another embodiment of the present disclosure.
Fig. 11 is a schematic flowchart of a direct communication method for a positioning service provided in yet another embodiment of the present disclosure.
Fig. 12 is a schematic diagram showing interaction of a direct communication method for a positioning service provided in an embodiment of the present disclosure.
Fig. 13 is a block diagram of a communication device provided in an embodiment of the present disclosure.
Fig. 14 is a block diagram of another communication device provided in an embodiment of the present disclosure.
Fig. 15 is a block diagram of a chip provided in an embodiment of the present disclosure.

### DETAILED DESCRIPTION

Embodiments of the present disclosure will be further explained in conjunction with the accompanying drawings and specific implementations.

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

Depending on the context, the words 'if' and 'in response to' used here can be interpreted as 'when' or 'upon' or 'in response to a determination'.

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

For ease of understanding, the terms involved in this disclosure are first introduced.

### 1. Long term credentials

Long term credentials are credentials provided to terminal devices as security roots for PC5 unicast links. They are used to export the root key of related services through authentication and key establishment processes.

### 2. K_{NRP}

K_{NRP} is the root key for shared unicast link communication between terminal devices, where the NRP is an abbreviation of "Next generation Radio ProSe". It is a root key generated by the terminal device based on the security mechanism of proximity service (ProSe) or vehicle to everything (V2X) service.

In order to better understand the indication method for transmission configuration indication status disclosed in embodiments of the present disclosure, the following first describes the communication system applicable to embodiments of the present disclosure.

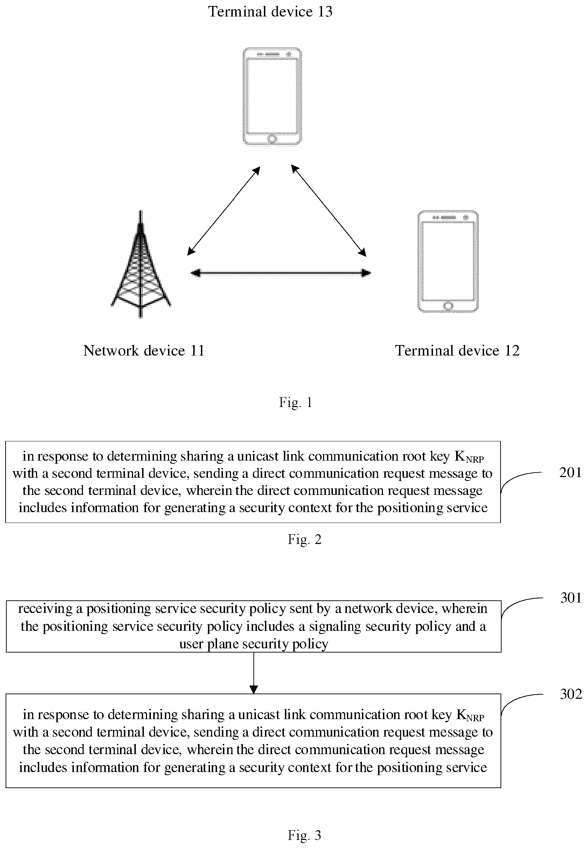

Please refer to Fig. 1, which is a schematic diagram of an architecture of a communication system provided in an embodiment of the present disclosure. The communication system may include, but is not limited to, one network device and one terminal device. The number and form of devices shown in Fig. 1 are for example only and do not constitute a limitation on the embodiments of the present disclosure. In practical applications, it may include two or more network devices and two or more terminal devices. The communication system shown in Fig. 1 takes the example of including one network device 11 and two terminal devices (terminal device 12 and terminal device 13).

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The network device 11 in embodiments of the present disclosure is an entity on the network side used for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU. In this disclosure, the TRP can also be replaced with a remote radio head or antenna panel.

The terminal device 12 and the terminal device 13 in embodiments of the present disclosure are entities on the user side used for receiving or transmitting signals, such as a mobile phone. The terminal device may also be referred to as terminal, user equipment (UE), mobile station (MS), mobile terminal (MT), etc. The terminal device may be communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city and wireless terminal device in smart home, etc. The specific technology and device form adopted by the terminal device is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems. At present, a Ranging/Sidelink Positioning Protocol (RSPP) process has been proposed for enhanced 5G architecture to directly transmit ranging capability, auxiliary data, and location information to terminal devices for ranging or sidelink positioning. It was also proposed to host a new SR5 interface on the PC5 interface to support Ranging/Sidelink Positioning Function (SPRF), hereinafter referred to as positioning service. Due to the fact that RSPP or SR5 (hereinafter referred to as RSPP/SR5) is built on top of the existing PC5 direct communication protocol specified in relevant regulations, the security protection of direct communication on RSPP/SR5 can rely on the existing security protection of PC5 direct communication. The activation of PC5 link security for direct communication depends on the PC5 security policy provided by the network device to the terminal device. The PC5 security policy is defined based on the security requirements of ProSe or V2X (hereinafter referred to as ProSe/V2X) applications or services running between terminal devices, that is, the PC5 security policy provided by the network device is associated with the ProSe/V2X applications/services supported and requested by the terminal devices.

However, since the security requirements of ranging or sidelink positioning services may differ from the security requirements of ProSe/V2X applications or services, if a PC5 direct communication link has been established before the terminal device starts (ranging or sidelink) positioning services, for example, a pair of terminal devices have already established PC5 direct communication for ProSe/V2X applications/services, but the security protection of the existing PC5 direct communication link established for ProSe/V2X applications/services may not support the security requirements of ranging/side link positioning services to be used between the same pair of terminal devices. Therefore, in this disclosure, it is proposed to regenerate a security context for positioning service security based on reusing the PC5 direct communication link established for the previous ProSe/V2X service, in order to provide security protection for the positioning service.

It should be noted that in this disclosure, the direct communication method for positioning service provided by any embodiment can be executed separately, or combined with possible implementation methods in other embodiments, and can also be executed together with any technical solution in related technologies.

It should be noted that in this disclosure, it is assumed that the security policies for ranging or sidelink positioning services have already been configured by the network devices to terminal devices.

Please refer to Fig. 2, which is a schematic flowchart of a direction communication method for a positioning service provided in an embodiment of the present disclosure. The method is performed by a first terminal device. As shown in Fig. 2, the method may include but is not limited to the following steps.

In step 201, in response to determining sharing a unicast link communication root key K_{NRP} with a second terminal device, a direct communication request message is sent to the second terminal device, wherein the direct communication request message includes information for generating a security context for the positioning service.

Optionally, the security context may include the root key K_{NRR} used for the positioning service, the session root key K_{NRR_SESS} derived from K_{NRR}, and so on.

Optionally, the information for geniting the security context for the positioning service may include following items:
first key establishment information (Key_Est_Info), a first candidate security algorithm list supported by the first terminal deice, a first random number, a first most significant bit (MSB) of an identifier (ID) of a first session root key K_{NRR_SESS} and a first candidate signaling security policy.

The key establishment information can be a type of information configured by the positioning service application layer to generate the key for the positioning service. In addition, the first candidate security algorithm list includes IDs or names of various algorithms supported by the first terminal device, so that the second device can determine the security algorithm to be used when generating the security context for the positioning service based on the available security algorithms supported by the first terminal device and its own supported security algorithms.

In addition, the first random number is a random number randomly generated by the first terminal device for the current security context used for the positioning service. The first MSB may be generated by the first terminal device based on the indication of the positioning service; or, the value may be selected from a preset database, which can be a database pre-configured or generated by the positioning service application layer, which is not limited in this disclosure. In this disclosure, the second terminal device can determine the ID of the generated second K_{NRR_SESS} based on the first MSB and other information.

The first candidate signaling security policy is pre-configured by the network device for the terminal device, which may include parameter configuration information related to signaling security. For example, it can include parameters for signaling integrity protection, or it can also include parameters for signaling encryption protection, etc., which is not limited in this disclosure.

Optionally, in order to ensure the accuracy and reliability of the positioning service results, in this disclosure, the parameter for signaling integrity protection in the first candidate signaling security policy configured by the network device to the first terminal device is "required", and the parameter for signaling encryption protection may be "required", "not required", "recommended", etc.

If the parameter for signaling encryption protection is "required", then the first terminal device and the second terminal device need to generate a key for signaling encryption protection when generating the security context for the positioning service; alternatively, if the parameter is "not required", then the first terminal device and the second terminal device should not generate a key for signaling encryption protection when generating the key for the positioning service; alternatively, if the parameter is indicated as "recommended", the first terminal device and the second terminal device may or may not generate a key for signaling encryption protection when generating the key for the positioning service, etc., which is not limited in this disclosure.

Optionally, as in this disclosure, the positioning service does not share the root key K_{NRP} of the ProSe/V2X service, K_{NRP} may not be included in the direct communication request message.

In this disclosure, when the first terminal device determines to initiate a ranging or sidelink positioning service with the second terminal device, if there is already a PC5 direct communication link between it and the second terminal device, it can directly send the information used to generate the security context for the positioning service to the second terminal device, so that the second terminal device can generate the security context for the positioning service based on the security context generation mechanism, thereby achieving reliable security protection for the positioning service between the first terminal device and the second terminal device by reusing the existing PC5 direct communication link.

Please refer to Fig. 3, which is a schematic flowchart of a direct communication method for a positioning service provided in an embodiment of the present disclosure, the method is performed by a first terminal device. As shown in Fig. 3, the method may include but is not limited to the following steps.

In step 301, a positioning service security policy sent by a network device is received, wherein the positioning service security policy includes a signaling security policy and a user plane security policy.

Optionally, the first terminal device may receive configuration data of the positioning service security policy sent by a Policy Control Function (PCF) network element through a control plane during the service authorization and information provision process.

Alternatively, the first terminal device can also receive configuration data for the positioning service security policy sent by the Direct Discovery Name Management Function (DDNMF) network element during the discovery process.

Alternatively, the first terminal device can also configuration data of the positioning service security policy sent by the prose key management function (PKMF) during the discovery process.

Optionally, PKMF and DDNMF can provide the security policy for the positioning service to terminal device through the user plane.

Optionally, the configuration data of the security policy may include: a signaling integrity protection parameters, a first selection parameter corresponding to signaling encryption protection, a user plane integrity protection parameter, and a second selection parameters corresponding to user plane encryption. The first selection parameter is used to indicate whether the signaling encryption protection is required to be executed, and the second selection parameter is used to indicate whether the user plane encryption protection is required to be executed.

In this disclosure, after receiving the configuration data of the security policy, the terminal device can protect the ranging or sidelink positioning service process based on the parameters contained in the configuration data. For example, if the first selection parameter represents that the signaling encryption protection is not required to be executed, then the first terminal device can perform the positioning service without encrypting the transmitted signaling; alternatively, if the second selection parameter represents that the user plane encryption protection is required to be executed, the first terminal device may need to encrypt the transmitted user plane data during the positioning service process, etc., which is not limited in this disclosure.

In this disclosure, the network device can send the positioning service security policy to the terminal device that can perform sidelink communication in advance, and then the terminal device can protect the direct communication process of the positioning service based on the positioning service security policy.

In step 302, in response to determining sharing a unicast link communication root key K_{NRP} with the second terminal device, a direct communication request message is sent to the second terminal device, wherein the direct communication request message includes information for generating a security context for the positioning service.

Optionally, the direct communication request message may include the aforementioned positioning service security policy.

For the specific implementation process of step 302, reference can be made to the detailed description of any embodiment disclosed herein, which will not be repeated here.

In this disclosure, after receiving the positioning service security policy sent by the network device, if there is a shared unicast link communication root key K_{NRP} between the terminal device and the second terminal device when starting the positioning service, the terminal device directly sends the direct communication request message to the second terminal device to request the generation of the security context for the positioning service. Thus, reliable security protection for the positioning service can be achieved between the first terminal device and the second terminal device by reusing the existing PC5 direct communication link.

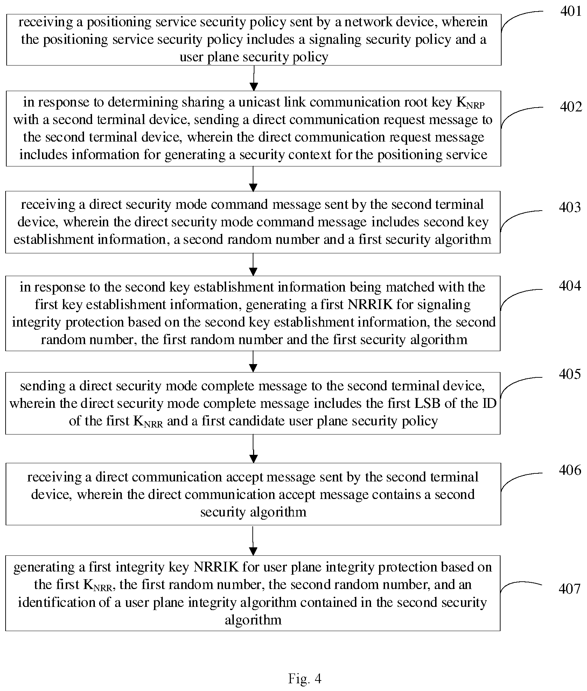

Please refer to Fig. 4, which is a schematic flowchart of a direct communication method for a positioning service provided in an embodiment of the present disclosure, the method is performed by a first terminal device. As shown in Fig. 4, the method may include but is not limited to the following steps.

In step 401, a positioning service security policy sent by a network device is received, wherein the positioning service security policy includes a signaling security policy and a user plane security policy.

In step 402, in response to determining sharing a unicast link communication root key K_{NRP} with the second terminal device, a direct communication request message is sent to the second terminal device, wherein the direct communication request message includes information for generating a security context for the positioning service.

For the specific implementation process of steps 401 and 402, reference can be made to the detailed description of any embodiment disclosed herein, which will not be repeated here.

In step 403, a direct security mode command message sent by the second terminal device is received, wherein the direct security mode command message includes second key establishment information, a second random number, and a first security algorithm.

The second key establishment information is a type of information used by the second terminal device to generate the security context for the positioning service, which can be configured by the positioning service application layer. It should be noted that the second key establishment information on the second terminal device side is the same as the first key establishment information on the first terminal device side, as the second key establishment information is a parameter used to generate the secure context for the positioning service, which is implemented in cooperation between the first terminal device and the second terminal device.

The second random number is a random number randomly generated by the second terminal device when generating the security context for the positioning service. The first security algorithm is a security algorithm selected by the second terminal device based on the first candidate security algorithm list and its own supported second candidate security algorithm list to generate the security context for the positioning service.

Optionally, since the direct security mode command message is sent by the second terminal device after generating the second integrity key NRRIK for signaling integrity protection, the direct security mode command message can be a message that has undergone integrity protection processing by the second terminal device, thereby ensuring that the message received by the first terminal device is complete and reliable.

In step 404, in response to the second key establishment information being matched with the first key establishment information, a first NRRIK for signaling integrity protection is generated based on the second key establishment information, the second random number, the first random number, and the first security algorithm.

In this disclosure, when the first terminal device determines that the second key establishment information matches the first key establishment information, it can generate relevant keys in the positioning service context based on the parameters used to generate keys for the positioning service.

Optionally, the first terminal device can first calculate the first root key K_{NRR} for the positioning service based on the second key establishment information and preset long term credentials; afterwards, based on the first root key K_{NRR}, the second random number, and the first random number, generate the first session root key K_{NRR_SESS}; then, based on the first session root key K_{NRR_SESS} and the ID of the signaling integrity algorithm included in the first security algorithm, generate the first NRRIK for signaling integrity protection.

Optionally, the preset long term credentials is pre-configured by the positioning service application. The preset long term credentials can be the same or different from the long term credentials for generating the K_{NRP}.

In step 405, a direct security mode complete message is sent to the second terminal device, wherein the direct security mode complete message includes a first LSB of the ID of the first K_{NRR} and a first candidate user plane security policy.

Optionally, since the first terminal device has already generated the first NRRIK for signaling integrity protection before sending the direct security mode complete message, the first terminal device can complete the integrity protection processing of the direct security mode complete message before sending it to the second terminal device, thereby ensuring that the message received by the second terminal device is complete and reliable.

The first terminal device can generate the first LSB of the ID of the first K_{NRR} according to the generation rule indicated by the positioning service; alternatively, a value can be selected from the database of positioning service thresholds as the first LSB of the ID of the first K_{NRR}. The ID of the K_{NRR} is used to uniquely identify the K_{NRR} generated by the first terminal device. In this disclosure, the second terminal device can determine the ID of the generated first K_{NRR} based on the first LSB and other information. The ID of the first K_{NRR} is used to uniquely identify the first K_{NRR}. In addition, the first candidate user plane security policy is pre-configured by the network device for the terminal device, and may include parameter configuration information related to user plane data security, for example, may include parameters for user plane integrity protection, or may also include parameters for user plane encryption protection, etc., which is not limited in this disclosure.

In step 406, a direct communication accept message sent by the second terminal device is received, wherein the direct communication accept message contains a second security algorithm.

In step 407, a first integrity key NRRIK for user plane integrity protection is generated based on the first K_{NRR}, the second random number, the first random number, and the ID of the user plane integrity algorithm included in the second security algorithm.

In this disclosure, after the first terminal device sends the direct security mode complete message to the second terminal device, the second terminal device can determine the security policy to be used for the user plane based on the first candidate user plane security policy in the message and its own supported second candidate user plane security policy, and then select an available second security algorithm to generate a key for user plane integrity protection. Furthermore, the second security algorithm is sent to the first terminal device, so that the first terminal device generates a second NRRIK for user plane integrity protection based on the selected security algorithm.

Optionally, since the direct communication accept message is sent by the second terminal device after generating the key for user plane integrity protection, the message can also be a message that has undergone integrity protection processing by the second terminal device, ensuring that the message received by the first terminal device is complete and accurate.

In this disclosure, when the first terminal device receives the positioning service security policy configured by the network device and is to start the positioning service, if there is a shared unicast link communication root key K_{NRP} between it and the second terminal device, it directly sends the direct communication request message to the second terminal device, and then through information exchange with the second terminal device, generates the security key for signaling and the security key for the user plane used for the positioning service. Thus, reliable security protection for the positioning service can be achieved between the first terminal device and the second terminal device by reusing the existing PC5 direct communication link.

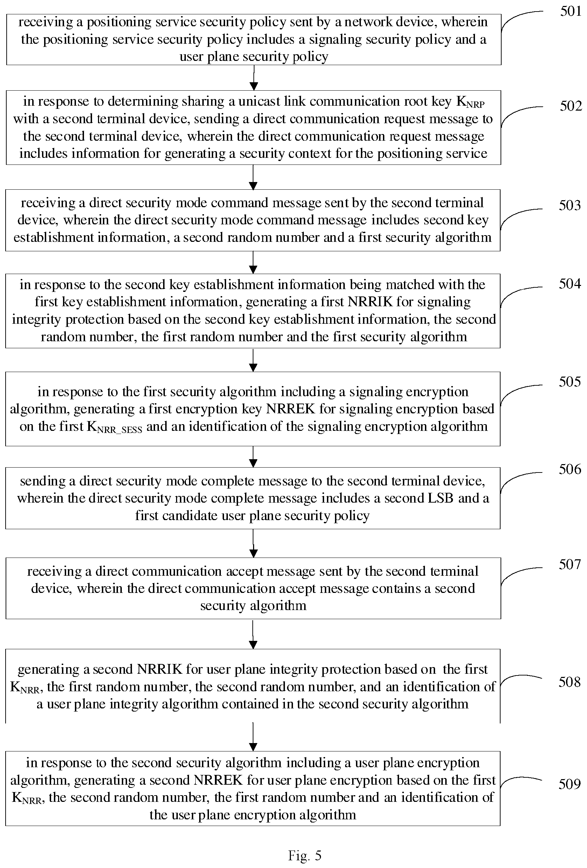

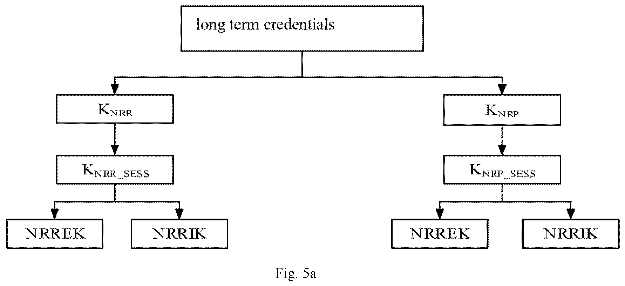

Please refer to Fig. 5, which is a schematic flowchart of a direct communication method for a positioning service provided in an embodiment of the present disclosure, the method is performed by a first terminal device. As shown in Fig. 5, the method may include but is not limited to the following steps.

In step 501, a positioning service security policy sent by a network device is received, wherein the positioning service security policy includes a signaling security policy and a user plane security policy.

In step 502, in response to determining sharing a unicast link communication root key K_{NRP} with the second terminal device, a direct communication request message is sent to the second terminal device, wherein the direct communication request message includes information for generating a security context for the positioning service.

In step 503, a direct security mode command message sent by the second terminal device is received, wherein the direct security mode command message includes second key establishment information, a second random number, and a first security algorithm.

In step 504, in response to the second key establishment information being matched with the first key establishment information, a first NRRIK for signaling integrity protection is generated based on the second key establishment information, the second random number, the first random number, and the first security algorithm.

For the specific implementation process of steps 501 to 504, reference can be made to the detailed description of any embodiment disclosed herein, which will not be repeated here.

In step 505, in response to the first security algorithm including a signaling encryption algorithm, a first encryption key NRREK for signaling encryption is generated based on the first K_{NRR_SESS} and the ID of the signaling encryption algorithm.

In this disclosure, if the second terminal device determines that signaling encryption protection is required during the positioning service process based on the first candidate signaling security policy and its own supported second candidate signaling security policy, it can select the signaling encryption algorithm used for signaling encryption protection and send it together with the signaling integrity protection algorithm to the first terminal device. Afterwards, the first terminal device can generate the first NRREK for signaling encryption based on the ID of the signaling encryption algorithm and the first K_{NRR_SESS}, in order to encrypt and protect the signaling during the positioning service process.

Optionally, the first terminal device can associate and store the first K_{NRR} and first K_{NRR_SESS} with their corresponding IDs after generating the first K_{NRR} and first K_{NRR_SESS}.

Optionally, the direct security mode command message further includes: the second MSB of the ID of the second K_{NRR}, and the second least significant bit (LSB) of the ID of the second K_{NRR_SESS}.

Correspondingly, the first terminal device can first determine the first LSB of the ID of the first K_{NRR}; afterwards, generate the ID of the first K_{NRR} based on the second MSB and the first LSB; and based on the second LSB and the first MSB, generate the ID of the first K_{NRR_SESS}; afterwards, associate and store the first K_{NRR} with the ID of the first K_{NRR}, and associate and store the first K_{NRR_SESS} with the ID of the first K_{NRR_SESS}.

The first terminal device can generate the first LSB of the ID of the first K_{NRR} according to the indication of the positioning service application layer; alternatively, can select the first LSB of the ID of the first K_{NRR} from the database preconfigured by the positioning service application.

In step 506, a direct security mode complete message is sent to the second terminal device, wherein the direct security mode complete message includes the second LSB and a first candidate user plane security policy.

In step 507, a direct communication accept message sent by the second terminal device is received, wherein the direct communication accept message contains a second security algorithm.

In step 508, a second NRRIK for user plane integrity protection is generated based on the first K_{NRR}, the second random number, the first random number, and the ID of the user plane integrity algorithm included in the second security algorithm.

In step 509, in response to the second security algorithm including a user plane encryption algorithm, a second NRREK for user plane encryption is generated based on the first K_{NRR}, the second random number, the first random number and the ID of the user plane encryption algorithm.

For the specific implementation process of steps 506 to 507, reference can be made to the detailed description of any embodiment disclosed herein, which will not be repeated here.

With reference to Fig. 5a, taking the example of preset long term credentials being the same as those used to generate K_{NRP}, the relationship between various keys will be explained. Fig. 5a is a schematic diagram of the relationship between various keys in the security context.

As shown in Fig. 5a, K_{NRR} and K_{NRP} are two root keys obtained through different security algorithms based on the same long term credential. Afterwards, based on K_{NRR}, K_{NRR_SESS} can be obtained through derivative processing, and then based on K_{NRR_SESS}, combined with the integrity protection algorithm, NRRIK can be obtained. Based on K_{NRR_SESS}, combined with the encryption protection algorithm, NRREK can be obtained. Similarly, based on K_{NRP}, K_{NRP_SESS} can be obtained through derivative processing, and then based on K_{NRP_SESS} and combined with the integrity protection algorithm, NRPIK can be obtained. Based on K_{NRP_SESS} and combined with the encryption protection algorithm, NRPEK can be obtained.

It should be noted that K_{NRR} and K_{NRP} can also be generated based on different long-term credentials, which is not limited in this disclosure.

In other words, ProSe/V2X service and positioning service can use the same PC5 direct communication link based on different security contexts.

In this disclosure, when the first terminal device receives the positioning service security policy configured by the network device and is to start the positioning service, if there is a shared unicast link communication root key K_{NRP} between it and the second terminal device, it directly sends the direct communication request message to the second terminal device, and then generates the key for integrity protection and the key for encryption protection used for the positioning service through information exchange with the second terminal device. Thus, reliable security protection for the positioning service can be achieved between the first terminal device and the second terminal device by reusing the existing PC5 direct communication link.

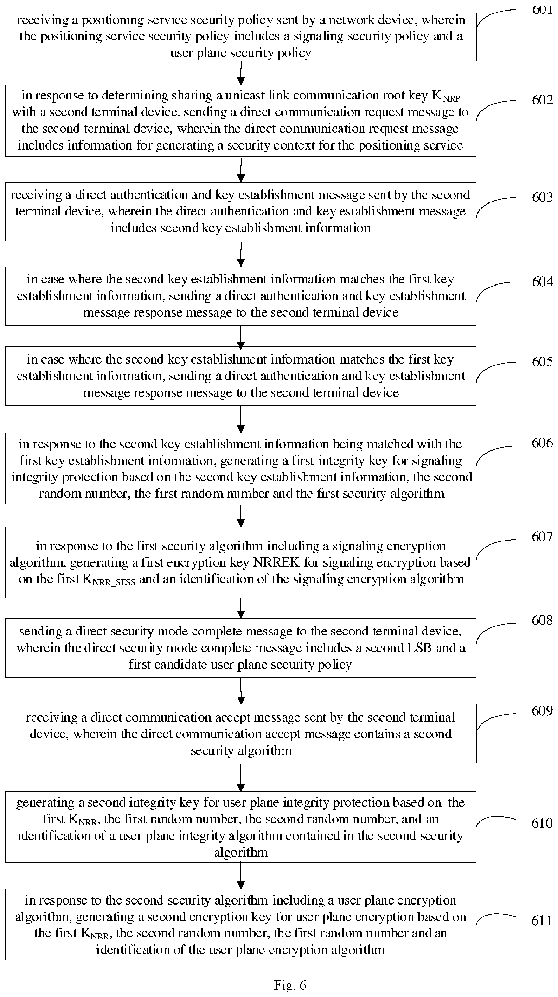

Please refer to Fig. 6, which is a schematic flowchart of a direct communication method for a positioning service provided in an embodiment of the present disclosure, the method is performed by a first terminal device. As shown in Fig. 6, the method may include but is not limited to the following steps.

In step 601, a positioning service security policy sent by a network device is received, wherein the positioning service security policy includes a signaling security policy and a user plane security policy.

In step 602, in response to determining sharing a unicast link communication root key K_{NRP} with the second terminal device, a direct communication request message is sent to the second terminal device, wherein the direct communication request message includes information for generating a security context for the positioning service.

For the specific implementation process of steps 601 to 602, reference can be made to the detailed description of any embodiment disclosed herein, which will not be repeated here.

In step 603, a direct authentication and key establishment message sent by the second terminal device is received, wherein the direct authentication and key establishment message contains second key establishment information.

In step 604, in the case where the second key establishment information matches the first key establishment information, a direct authentication and key establishment message response message is sent to the second terminal device.

In this disclosure, only after direct authentication is completed between the first terminal device and the second terminal device, the security context can be established to protect the positioning service process. Therefore, upon receiving the direct communication request message sent by the first terminal device, the second terminal device can initiate the authentication and key establishment process of the service, that is, send the direct authentication and key establishment message to the first terminal device.

Correspondingly, when the first terminal device determines that the second key establishment information received from the second terminal device matches its own first key establishment information, it can confirm that the authentication has been passed, and then return the direct authentication and key establishment message response message to indicate that the authentication has been passed, and the key establishment process can be initiated.

Optionally, if the first terminal device determines that the second key establishment information does not match the first key establishment information, it can also indicate to the second terminal device through direct authentication and key establishment message response message that the authentication has not been passed, which is not limited by this disclosure.

In step 605, a direct security mode command message sent by the second terminal device is received, wherein the direct security mode command message includes the second key establishment information, a second random number, and a first security algorithm.

In step 606, in response to the second key establishment information being matched with the first key establishment information, a first integrity key for signaling integrity protection is generated based on the second key establishment information, the second random number, the first random number, and the first security algorithm.

In step 607, in response to the first security algorithm including a signaling encryption algorithm, a first encryption key NRREK for signaling encryption is generated based on the first K_{NRR_SESS} and the ID of the signaling encryption algorithm.

In step 608, a direct security mode complete message is sent to the second terminal device, wherein the direct security mode complete message includes the second LSB and a first candidate user plane security policy.

In step 609, a direct communication accept message sent by the second terminal device is received, wherein the direct communication accept message contains a second security algorithm.

In step 610, a second integrity key for user plane integrity protection is generated based on the first K_{NRR}, the second random number, the first random number, and the ID of the user plane integrity algorithm included in the second security algorithm.

In step 611, in response to the second security algorithm including a user plane encryption algorithm, a second encryption key for user plane encryption is generated based on the first K_{NRR}, the second random number, the first random number and the ID of the user plane encryption algorithm.

For the specific implementation process of steps 605 to 611, reference can be made to the detailed description of any embodiment disclosed herein, which will not be repeated here.

In this disclosure, when the first terminal device receives the positioning service security policy configured by the network device and is to start the location service, if there is a shared unicast link communication root key K_{NRP} between it and the second terminal device, it directly sends the direct communication request message to the second terminal device, and then generates the key for integrity protection and the key for encryption protection used for the positioning service through information exchange with the second terminal device. Thus, reliable security protection for the positioning service can be achieved between the first terminal device and the second terminal device by reusing the existing PC5 direct communication link.

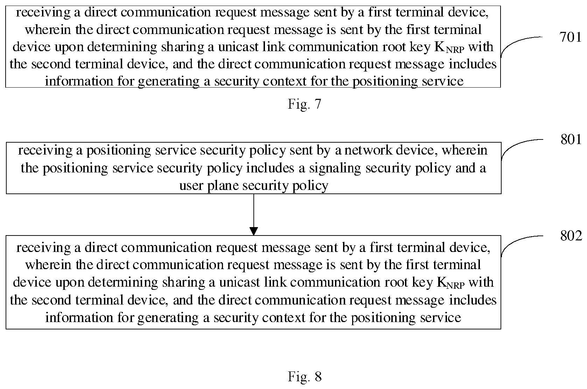

Please refer to Fig. 7, which is a schematic flowchart of another direct communication method for a positioning service provided in an embodiment of the present disclosure, the method is performed by a second terminal device. As shown in Fig. 7, the method may include but is not limited to the following steps.

In step 701, a direct communication request message sent by a first terminal device is received, wherein the direct communication request message is sent by the first terminal device in response to determining sharing a unicast link communication root key K_{NRP} with the second terminal device, and the direct communication request message includes information for generating a security context for the positioning service.

Optionally, the security context may include the root key K_{NRR} used for the positioning service, the session root key K_{NRR_SESS} derived from K_{NRR}, and so on.

Optionally, the information for geniting the security context for the positioning service may include following items:
first key establishment information (Key_Est_Info), a first candidate security algorithm list supported by the first terminal deice, a first random number, a first most significant bit (MSB) of an identifier (ID) of a first session root key K_{NRR_SESS} and a first candidate signaling security policy.

The key establishment information can be a type of information configured by the positioning service application layer to generate the key for the positioning service. In addition, the first candidate security algorithm list includes IDs or names of various algorithms supported by the first terminal device, so that the second device can determine the security algorithm to be used when generating the security context for the positioning service based on the available security algorithms supported by the first terminal device and its own supported security algorithms.

In addition, the first random number is a random number randomly generated by the first terminal device for the current security context used for the positioning service. The first MSB may be generated by the first terminal device based on the indication of the positioning service; or, the value may be selected from a preset database, which can be a database pre-configured or generated by the positioning service application layer, which is not limited in this disclosure. In this disclosure, the second terminal device can determine the ID of the generated session root key K_{NRR_SESS} based on the first MSB and other information.

The first candidate signaling security policy is pre-configured by the network device for the terminal device, which may include parameter configuration information related to signaling security. For example, it can include parameters for signaling integrity protection, or it can also include parameters for signaling encryption protection, etc., which is not limited in this disclosure.

Optionally, in order to ensure the accuracy and reliability of the positioning service results, in this disclosure, the parameter for signaling integrity protection in the first candidate signaling security policy configured by the network device to the first terminal device is "required", and the parameter for signaling encryption protection may be "required", "not required", "recommended", etc.

If the parameter for signaling encryption protection is "required", then the first terminal device and the second terminal device need to generate a key for signaling encryption protection when generating the security context for the positioning service, alternatively, if the parameter is "not required", then the first terminal device and the second terminal device should not generate a key for signaling encryption protection when generating the key for the positioning service; alternatively, if the parameter is indicated as "recommended", the first terminal device and the second terminal device may or may not generate a key for signaling encryption protection when generating the key for the positioning service, etc., which is not limited in this disclosure.

Optionally, as in this disclosure, the positioning service does not share the root key K_{NRP} of the ProSe/V2X service, K_{NRP} may not be included in the direct communication request message.

In this disclosure, the second terminal device can generate the security key for the positioning service upon receiving the information for generating the security context for the positioning service sent by the first terminal device. Thus, reliable security protection for the positioning service can be achieved between the first terminal device and the second terminal device by reusing the existing PC5 direct communication link.

Please refer to Fig. 8, which is a schematic flowchart of a direct communication method for a positioning service provided in an embodiment of the present disclosure, the method is performed by a second terminal device. As shown in Fig. 8, the method may include but is not limited to the following steps.

In step 801, a positioning service security policy sent by a network device is received, wherein the positioning service security policy includes a signaling security policy and a user plane security policy.

In step 802, a direct communication request message sent by a first terminal device is received, wherein the direct communication request message is sent by the first terminal device in response to determining sharing a unicast link communication root key K_{NRP} with the second terminal device, and the direct communication request message includes information for generating a security context for the positioning service.

For the specific implementation process of steps 801 to 802, reference can be made to the detailed description of any embodiment disclosed herein, which will not be repeated here.

In this disclosure, the second terminal device, upon receiving the positioning service security policy sent by the network device and the information used to generate the security context for the positioning service sent by the first terminal device, can determine the current security policy to be executed based on its own positioning service security policy and the positioning service security policy on the first terminal device side, and then generate the security context for the positioning service based on the security policy to be executed and other relevant parameters.

In this disclosure, the second terminal device generates the security key for the positioning service upon receiving the positioning service security policy configured by the network device and the information sent by the first terminal device for generating the security context for the positioning service. Thus, reliable security protection for the positioning service can be achieved between the first terminal device and the second terminal device by reusing the existing PC5 direct communication link.

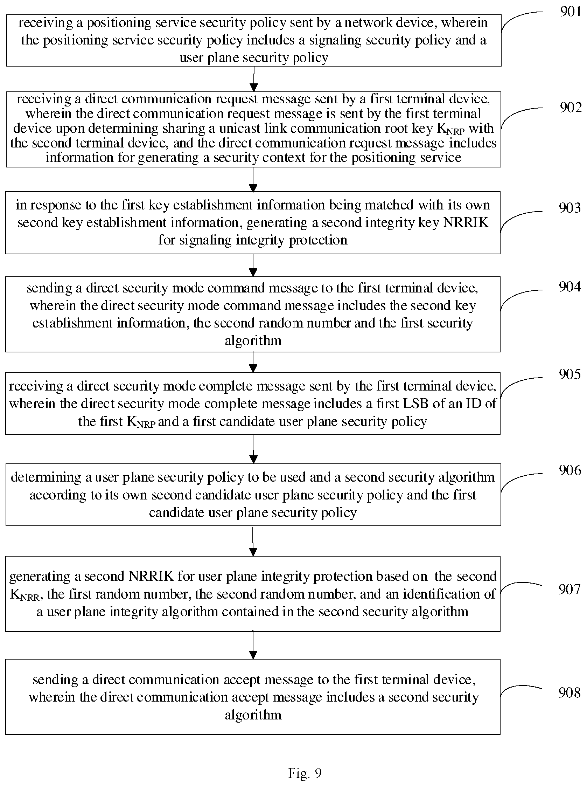

Please refer to Fig. 9, which is a schematic flowchart of a direct communication method for a positioning service provided in an embodiment of the present disclosure, the method is performed by a second terminal device. As shown in Fig. 9, the method may include but is not limited to the following steps.

In step 901, a positioning service security policy sent by a network device is received, wherein the positioning service security policy includes a signaling security policy and a user plane security policy.

In step 902, a direct communication request message sent by a first terminal device is received, wherein the direct communication request message is sent by the first terminal device in response to determining sharing a unicast link communication root key K_{NRP} with the second terminal device, and the direct communication request message includes information for generating a security context for the positioning service.

In step 903, in response to the first key establishment information being matched with its own second key establishment information, a second integrity key NRRIK for signaling integrity protection is generated.

Optionally, after determining that the first key establishment information matches its own second key establishment information, the second terminal device can generate the second NRRIK for signaling integrity protection based on its own second candidate signaling security policy and the first candidate signaling security policy on the first terminal device side.

Optionally, the terminal device can first determine the signaling security policy to be used based on its own second candidate signaling security policy and the first candidate signaling security policy; then, based on the signaling security policy to be used, the second candidate security algorithm list supported by itself, and the first candidate security algorithm list, determine the first security algorithm; then, based on the first random number, the generated second random number, and the first security algorithm, generate the second NRRIK for signaling integrity protection.

Optionally, the second terminal device can first calculate the second root key K_{NRR} for the positioning service based on the second key establishment information of the preset long term credentials; then, based on the second K_{NRR}, the second random number, and the first random number, generate the second session root key K_{NRR_SESS}; afterwards, based on the ID of the signaling integrity algorithm included in the first security algorithm and the second K_{NRR_SESS}, generate the second integrity key NRRIK for signaling integrity protection.

The second key establishment information is a type of information used by the second terminal device to generate the security context for the positioning service, which can be configured by the positioning service application layer. It should be noted that the second key establishment information on the second terminal device side is the same as the first key establishment information on the first terminal device side, as the second key establishment information is a parameter used to generate the secure context for the positioning service, which is implemented in cooperation between the first terminal device and the second terminal device.

Optionally, the preset long term credentials are pre-configured by the positioning service application. The preset long term credentials can be the same or different from the long term credentials for generating the K_{NRP}.

In step 904, a direct security mode command message is sent to the first terminal device, wherein the direct security mode command message includes second key establishment information, a second random number, and a first security algorithm.

The second key establishment information is a type of information used by the second terminal device to generate the security context for the positioning service, which can be configured by the po sitioning service application layer. It should be noted that the second key establishment information on the second terminal device side is the same as the first key establishment information on the first terminal device side, as the second key establishment information is a parameter used to generate the secure context for the positioning service, which is implemented in cooperation between the first terminal device and the second terminal device.

The second random number is a random number randomly generated by the second terminal device when generating the security context for the positioning service. The first security algorithm is a security algorithm selected by the second terminal device based on the first candidate security algorithm list and its own supported second candidate security algorithm list to generate the security context for the positioning service.

Optionally, since the direct security mode command message is sent by the second terminal device after generating the integrity key for signaling integrity protection, the direct security mode command message can be a message that has undergone integrity protection processing by the second terminal device, thereby ensuring that the message received by the first terminal device is complete and reliable.

That is, in this disclosure, the second terminal device can use the second NRRIK for signaling integrity protection to protect the integrity of the direct security mode command message.

In step 905, a direct security mode complete message sent by the first terminal device is received, wherein the direct security mode complete message includes a first LSB of the ID of the first K_{NRR} and a first candidate user plane security policy.

Optionally, since the first terminal device has already generated the first NRRIK for signaling integrity protection before sending the direct security mode complete message, the first terminal device can complete the integrity protection processing of the direct security mode complete message before sending it to the second terminal device, thereby ensuring that the message received by the second terminal device is complete and reliable.

The first terminal device can generate the first LSB of the ID of the first K_{NRR} according to the generation rule indicated by the positioning service; alternatively, a value can be selected from the database of positioning service thresholds as the first LSB of the ID of the first K_{NRR}. The ID of the first K_{NRR} is used to uniquely identify the first K_{NRR} generated by the first terminal device. In this disclosure, the second terminal device can determine the ID of the generated second K_{NRR} based on the first LSB and other information. The ID of the second K_{NRR} is used to uniquely identify the second K_{NRR} generated by the second terminal device.

In addition, the first candidate user plane security policy is pre-configured by the network device for the terminal device, and may include parameter configuration information related to user plane data security, for example, may include parameters for user plane integrity protection, or may also include parameters for user plane encryption protection, etc., which is not limited in this disclosure.

Optionally, the second terminal device can determine the second MSB of the ID of the second root key K_{NRR} and the second LSB of the ID of the second session root key K_{NRR_SESS} upon receiving the first LSB of the ID of the first K_{NRR} sent by the first terminal device; then, based on the second MSB and the first LSB, generate the ID of the second K_{NRR}; and generate the ID of the second K_{NRR_SESS} based on the second LSB and the first MSB; then associate and store the second K_{NRR} with its ID, and the second K_{NRR_SESS} with its ID.

The second terminal device can generate the second MSB of the ID of the second K_{NRR} and the second LSB of the ID of the second K_{NRR_SESS} respectively according to the instructions of the positioning service application layer; alternatively, can select the second LSB of the ID of the second K_{NRR} and the second LSB of the ID of the second K_{NRR_SESS} respectively from the database pre-configured by the positioning service application, which is not limited in this disclosure.

In step 906, a user plane security policy to be used and a second security algorithm are determined based on its own second candidate user plane security policy and the first candidate user plane security policy.

Optionally, the second terminal device can first determine the user plane security policy to be used based on the first candidate user plane security policy and the first candidate user plane security policy. Furthermore, based on the determined user plane security policy to be used and the lists of security algorithms supported by the first terminal device and the second terminal device respectively, the second security algorithm is determined.

In step 907, a second NRRIK for user plane integrity protection is generated based on the second K_{NRR}, the second random number, the first random number, and the ID of the user plane integrity algorithm included in the second security algorithm.

In step 908, a direct communication accept message is sent to the first terminal device, wherein the direct communication accept message contains a second security algorithm.

For the specific implementation process of steps 906 to 908, reference can be made to the detailed description of any embodiment disclosed herein, which will not be repeated here.

In this disclosure, the second terminal device, upon receiving the positioning service security policy configured by the network device and the information sent by the first terminal device for generating the security context for the positioning service, can generate the security key for the positioning service through information exchange with the first terminal device. Thus, reliable security protection for the positioning service can be achieved between the first terminal device and the second terminal device by reusing the existing PC5 direct communication link.

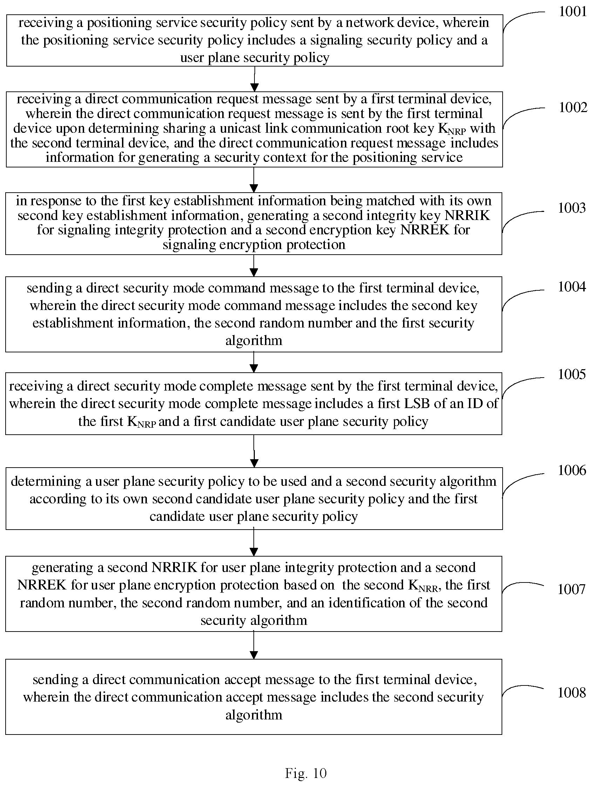

Please refer to Fig. 10, which is a schematic flowchart of a direct communication method for a positioning service provided in an embodiment of the present disclosure, the method is performed by a second terminal device. As shown in Fig. 10, the method may include but is not limited to the following steps.

In step 1001, a positioning service security policy sent by a network device is received, wherein the positioning service security policy includes a signaling security policy and a user plane security policy.

In step 1002, a direct communication request message sent by a first terminal device is received, wherein the direct communication request message is sent by the first terminal device in response to determining sharing a unicast link communication root key K_{NRP} with the second terminal device, and the direct communication request message includes information for generating a security context for the positioning service.

In step 1003, in response to the first key establishment information being matched with its own second key establishment information, a second integrity key NRRIK for integrity protection and a second encryption key NRREK for signaling encryption protection are generated.

Optionally, after determining that the first key establishment information matches its own second key establishment information, the second terminal device can determine the signaling security policy to be executed based on its own second candidate signaling security policy and the first candidate signaling security policy of the first terminal device. Furthermore, based on the signaling security policy to be executed, combined with its own second security algorithm list and the first security algorithm list supported by the first terminal device, the first security algorithm is selected.

If the first security algorithm includes both the signaling integrity algorithm and the signaling encryption algorithm, the second NRRIK for signaling integrity protection can be generated based on the second K_{NRR_SESS} and the ID of the signaling integrity algorithm. Meanwhile, based on the second K_{NRR_SESS} and the ID of the signaling encryption algorithm, the second NRREK for signaling encryption is generated.

In step 1004, a direct security mode command message is sent to the first terminal device, wherein the direct security mode command message includes second key establishment information, a second random number, and a first security algorithm.

In step 1005, a direct security mode complete message sent by the first terminal device is received, wherein the direct security mode complete message includes a first LSB of the ID of the first K_{NRR} and a first candidate user plane security policy.

In step 1006, a user plane security policy to be used and a second security algorithm are determined based on its own second candidate user plane security policy and the first candidate user plane security policy.

Optionally, the second terminal device can first determine the user plane security policy to be used based on the first candidate user plane security policy and the first candidate user plane security policy. Furthermore, based on the determined user plane security policy to be used and the lists of security algorithms supported by the first terminal device and the second terminal device respectively, the second security algorithm is determined.

In step 1007, a second NRRIK for user plane integrity protection and a second NRREK for user plane encryption protection are generated based on the second K_{NRR}, the second random number, the first random number, and the ID of the second security algorithm.

Optionally, after determining the second security algorithm, if the second security algorithm includes the user plane encryption algorithm, the second terminal device can generate the second NRREK for user plane encryption based on the second K_{NRR_SESS} and the ID of the user plane encryption algorithm.

In step 1008, a direct communication accept message is sent to the first terminal device, wherein the direct communication accept message contains the second security algorithm.

For the specific implementation process of above steps, reference can be made to the detailed description of any embodiment disclosed herein, which will not be repeated here.

In this disclosure, after receiving the positioning service security policy configured by the network device and the information sent by the first terminal device for generating the security context for the positioning service, the second terminal device can generate keys for integrity protection and encryption protection for the positioning service through information exchange with the first terminal device. Thus, reliable security protection for the positioning service can be achieved between the first terminal device and the second terminal device by reusing the existing PC5 direct communication link.

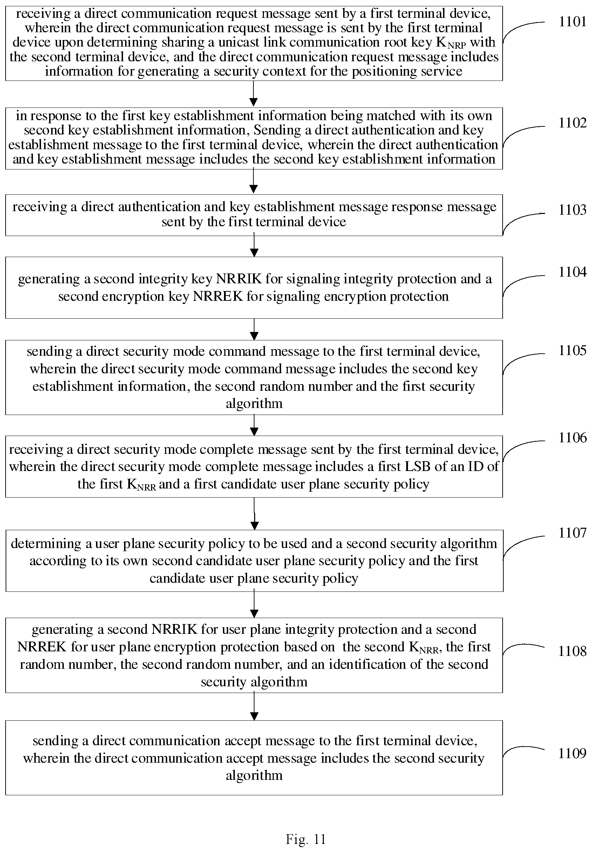

Please refer to Fig. 11, which is a schematic flowchart of a direct communication method for a positioning service provided in an embodiment of the present disclosure, the method is performed by a second terminal device. As shown in Fig. 11, the method may include but is not limited to the following steps.

In step 1101, a direct communication request message sent by a first terminal device is received, wherein the direct communication request message is sent by the first terminal device in response to determining sharing a unicast link communication root key K_{NRP} with the second terminal device, and the direct communication request message includes information for generating a security context for the positioning service.

In step 1102, in response to the first key establishment information being matched with its own second key establishment information, a direct authentication and key establishment message is sent to the first terminal device, wherein the direct authentication and key establishment message contains the second key establishment information.

In step 1103, a direct authentication and key establishment message response message sent by the first terminal device is received.

In this disclosure, only after direct authentication is completed between the first terminal device and the second terminal device, the security context be established to protect the positioning service process. Therefore, upon receiving the direct communication request message sent by the first terminal device, the second terminal device can initiate the authentication and key establishment process of the service, that is, send the direct authentication and key establishment message to the first terminal device.

Correspondingly, when the first terminal device determines that the received second key establishment information from the second terminal device matches its own first key establishment information, it can confirm that the authentication has been passed, and then return the direct authentication and key establishment message response message to indicate that the authentication has been passed, and the key establishment process can be initiated.

Optionally, if the first terminal device determines that the second key establishment information does not match the first key establishment information, it can also indicate to the second terminal device through the direct authentication and key establishment message response message that the authentication has not been passed, which is not limited in this disclosure.

In step 1104, a second integrity key NRRIK for signaling integrity protection and a second encryption key NRREK for signaling encryption protection are generated.

In step 1105, a direct security mode command message is sent to the first terminal device, wherein the direct security mode command message includes the second key establishment information, the second random number, and the first security algorithm.

In step 1106, a direct security mode complete message sent by the first terminal device is received, wherein the direct security mode complete message includes a first LSB of the ID of the first K_{NRR} and a first candidate user plane security policy.

In step 1107, a user plane security policy to be used and a second security algorithm are determined based on its own second candidate user plane security policy and the first candidate user plane security policy.

In step 1108, a second NRRIK for user plane integrity protection and a second NRREK for user plane encryption protection are generated based on the second K_{NRR}, the second random number, the first random number, and the ID of the second security algorithm.

In step 1109, a direct communication accept message is sent to the first terminal device, wherein the direct communication accept message contains the second security algorithm.

For the specific implementation process of above steps, reference can be made to the detailed description of any embodiment disclosed herein, which will not be repeated here.

In this disclosure, after receiving the positioning service security policy configured by the network device and the information sent by the first terminal device for generating the security context for the positioning service, the second terminal device can generate the keys for integrity protection and encryption protection for the positioning service through information exchange with the first terminal device. Thus, reliable security protection for the positioning service can be achieved between the first terminal device and the second terminal device by reusing the existing PC5 direct communication link.

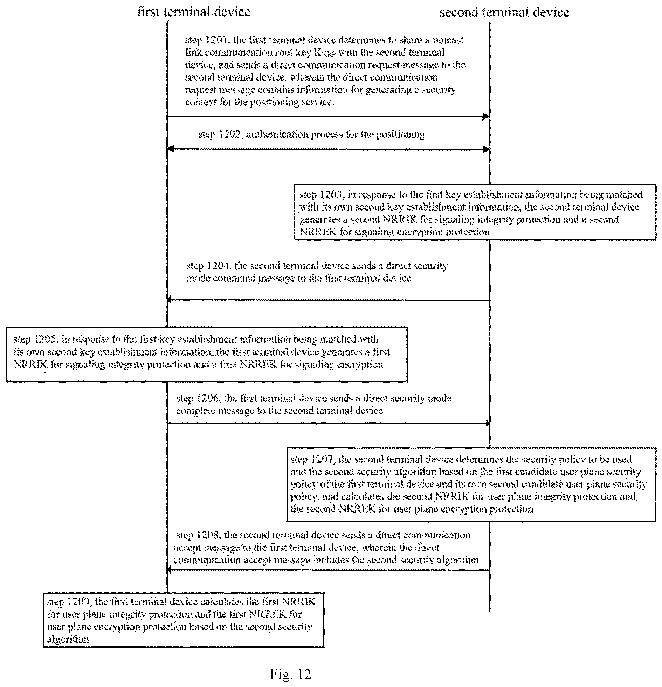

The direct communication method for the positioning service proposed in this disclosure will be further explained in conjunction with the signaling interaction diagram shown in Fig. 12.

Please refer to Fig. 12, which is a schematic flowchart of a direct communication method for a positioning service provided in an embodiment of the present disclosure. As shown in Fig. 12, the method may include but is not limited to the following steps.

In step 1201, the first terminal device determines to share a unicast link communication root key K_{NRP} with the second terminal device, and sends a direct communication request message to the second terminal device. The direct communication request message contains information for generating a security context for the positioning service.

In step 1202, authentication process for the positioning service is performed.

In step 1203, in response to the first key establishment information being matched with its own second key establishment information, the second terminal device generates a second NRRIK for signaling integrity protection and a second NRREK for signaling encryption protection.

In step 1204, the second terminal device sends a direct security mode command message to the first terminal device.

The direct security mode command message includes: second key establishment information, second random number, first security algorithm, second MSB of the ID of the second K_{NRR}, and second LSB of the ID of the second K_{NRR_SESS}.

In step 1205, in response to the first key establishment information being matched with its own second key establishment information, the first terminal device generates a first NRRIK for signaling integrity protection and a first NRREK for signaling encryption protection.

In step 1206, the first terminal device sends a direct security mode complete message to the second terminal device.

In step 1207, the second terminal device determines the security policy to be used and the second security algorithm based on the first candidate user plane security policy of the first terminal device and its own second candidate user plane security policy, and calculates the second NRRIK for user plane integrity protection and the second NRREK for user plane encryption protection.

In step 1208, the second terminal device sends a direct communication accept message to the first terminal device, wherein the direct communication accept message includes the second security algorithm.

In step 1209, the first terminal device calculates the first NRRIK for user plane integrity protection and the first NRREK for user plane encryption protection based on the second security algorithm.

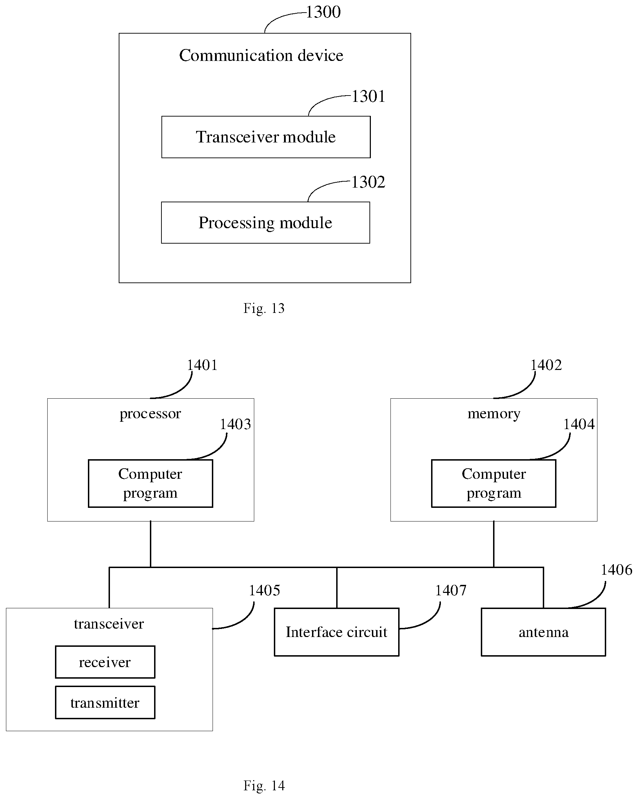

Fig. 13 is a block diagram of a communication device 1300 provided in an embodiment of the present disclosure. The communication device 1300 shown in Fig. 13 may include a processing module 1301 and a transceiver module 1302.

It can be understood that the communication device 1300 may be a terminal device, or may be a device in the terminal device, or may be a device that can be used in conjunction with the terminal device.

Optionally, the communication device 1300 is on the first terminal device side.

The transceiver module 1302 is configured to sending a direct communication request message to a second terminal device, in response to determining sharing a unicast link communication root key K_{NRP} with the second terminal device, wherein the direct communication request message comprises information for generating a security context for the positioning service.

Optionally, the direct communication request message does not include the K_{NRP}.

Optionally, the information for generating the security context for the positioning service includes at least one of:
first key establishment information; a first candidate security algorithm list supported by the first terminal device; a first random number; a first most significant bit (MSB) of an identifier (ID) of a first session root key K_{NRR_SESS}; or a first candidate signaling security policy.

Optionally, the transceiver module 1302 is further configured to:
receive a direct security mode command message sent by the second terminal device, wherein the direct security mode command message includes second key establishment information, a second random number and a first security algorithm;
the device further includes:
   the processing module 1301, configured to, in response to the second key establishment information being matched with the first key establishment information, generate a first integrity key NRRIK for signaling integrity protection based on the second key establishment information, the second random number, the first random number and the first security algorithm.

Optionally, the processing module 1301 is configured to:
calculate a first root key K_{NRR} for the positioning service based on the second key establishment information and preset long term credentials;
generate the first K_{NRR_SESS} based on the first K_{NRR}, the second random number and the first random number; and
generate the first NRRIK for signaling integrity protection based on the first K_{NRR_SESS} and an ID of a signaling integrity algorithm contained in the first security algorithm.

Optionally, the preset long term credentials are the same as or different from long term credentials for generating the K_{NRR}.

Optionally, the processing module 1301 is further configured to:
in response to the first security algorithm including a signaling encryption algorithm, generate a first encryption key NRREK for signaling encryption based on the first K_{NRR_SESS} and an ID of the signaling encryption algorithm.

Optionally, the direct security mode command message further includes a second MSB of an ID of a second root key K_{NRR} and a second least significant bit (LSB) of an ID of a second K_{NRR_SESS}.

Optionally, the processing module 1301 is further configured to:
determine a first LSB of the ID of the first K_{NRR};
generate the ID of the first K_{NRR} based on the second MSB and the first LSB;
generate the ID of the first K_{NRR_SESS} based on the second LSB and the first MSB; and
associate and store the first K_{NRR} with the ID of the first K_{NRR}, and the first K_{NRR_SESS} with the ID of the first K_{NRR_SESS}.

Optionally, the transceiver module 1302 is further configured to:
send a direct security mode complete message to the second terminal device, wherein the direct security mode complete message includes the first LSB and a first candidate user plane security policy;
receive a direct communication accept message sent by the second terminal device, wherein the direct communication accept message contains a second security algorithm;
the processing module 1301 is further configured to generate a first NRRIK for user plane integrity protection based on the first K_{NRR_SESS}, the second random number, the first random number and an ID of a user plane integrity algorithm contained in the second security algorithm.

Optionally, the processing module 1301 is further configured to:
in response to the second security algorithm including a user plane encryption algorithm, generate a first NRREK for user plane encryption based on the first K_{NRR_SESS}, the first random number, the second random number and an ID of the user plane encryption algorithm.

Optionally, the transceiver module 1302 is configured to:
receive a positioning service security policy sent by a network device, wherein the positioning service security policy includes a signaling security policy and a user plane security policy.

Optionally, the transceiver module 1302 is configured to:
receive configuration data of the positioning service security policy sent by a policy control function (PCF) network element through a control plane during a service authorization and information provision process; or,
receive configuration data of the positioning service security policy sent by a directly discover name management function (DDNMF) network element during a discovery process; or,
receive configuration data of the positioning service security policy sent by a prose key management function (PKMF) network element during a discovery process.

Optionally, the configuration data of the security policy includes a signaling integrity protection parameter, a first selection parameter corresponding to signaling encryption protection, a user plane integrity protection parameter, and a second selection parameter corresponding to user plane encryption, wherein the first selection parameter is used to indicate whether the signaling encryption protection is required to be executed, and the second selection parameter is used to indicate whether the user plane encryption protection is required to be executed.

Optionally, the transceiver module 1302 is further configured to:
receive a direct authentication and key establishment message sent by the second terminal device, wherein the direct authentication and key establishment message contains the second key establishment information;
send a direct authentication and key establishment message response message to the second terminal device when the second key establishment information matches the first key establishment information.

In this disclosure, when the first terminal device determines to initiate ranging or sidelink positioning service with the second terminal device, if there is already a PC5 direct communication link between it and the second terminal device, it can directly send the information used to generate the security context for the positioning service to the second terminal device, so that the second terminal device can generate the security context for positioning service based on the security context generation mechanism, thereby achieving reliable security protection for the positioning service between the first terminal device and the second terminal device by reusing the existing PC5 direct communication link.

Optionally, the communication device 1300 is on the second terminal device side:
The transceiver module 1302 is configured to receive a direct communication request message sent by a first terminal device, wherein the direct communication request message is sent by the first terminal device upon determining sharing a unicast link communication root key K_{NRP} with the second terminal device, and the direct communication request message includes information for generating a security context for the positioning service.

Optionally, the direct communication request message does not include the K_{NRP}.

Optionally, the information for generating the security context for the positioning service includes at least one of: first key establishment information; a first candidate security algorithm list supported by the first terminal device; a first random number; a first most significant bit (MSB) of an identifier (ID) of a first session root key K_{NRR_SESS}; or a first candidate signaling security policy.

Optionally, the device further includes the processing module 1301, configured to:
in response to the first key establishment information being matched with its own second key establishment information, determine a signaling security policy to be used based on its own second candidate signaling security policy and the first candidate signaling security policy;
determine a first security algorithm based on the signaling security policy to be used, a second candidate security algorithm list supported by itself, and the first candidate security algorithm list;
generate a second integrity key NRRIK for signaling integrity protection based on the first random number, a second random number generated by itself, and the first security algorithm;
send a direct security mode command message to the first terminal device, wherein the direct security mode command message includes the second key establishment information, the second random number, and the first security algorithm.

Optionally, the processing module 1301 is configured to:
calculate a second root key K_{NRR} for the positioning service based on the second key establishment information and preset long term credentials;
generate a second K_{NRR_SESS} based on the second K_{NRR}, the second random number, and the first random number;
generate the second NRRIK based on an ID of a signaling integrity algorithm contained in the first security algorithm and the second K_{NRR_SESS}.

Optionally, the preset long term credentials are the same as or different from long term credentials for generating the K_{NRR}.

Optionally, the processing module 1301 is further configured to:
in response to the first security algorithm including a signaling encryption algorithm, generate a second encryption key NRREK for signaling encryption based on the second K_{NRR_SESS} and an ID of the signaling encryption algorithm.

Optionally, the processing module 1301 is further configured to:
use the second NRRIK for signaling integrity protection to protect the integrity of the direct security mode command message.

Optionally, the direct security mode command message further includes a second MSB of an ID of a second root key K_{NRR} and a second least significant bit (LSB) of an ID of a second K_{NRR_SESS}.

Optionally, the transceiver module 1302 is further configured to:
receive a direct security mode complete message sent by the first terminal device, wherein the direct security mode complete message includes a first LSB of an ID of a first K_{NRR} and a first candidate user plane security policy;
the processing module 1301 is further configured to determine a second security algorithm and a user plane security policy to be used based on its own second candidate user plane security policy and the first candidate user plane security policy;
the processing module 1301 is further configured to generate a second integrity key for user plane integrity protection based on an ID of a user plane integrity algorithm contained in the second security algorithm and the second K_{NRR_SESS};
the transceiver module 1302 is further configured to send a direct communication accept message to the first terminal device, wherein the direct communication accept message contains the second security algorithm.

Optionally, the processing module 1301 is further configured to:
determine a second MSB of an ID of the second root key K_{NRR} and a second LSB of an ID of the second K_{NRR_SESS};
generate the ID of the second K_{NRR} based on the second MSB and the first LSB;
generate the ID of the second K_{NRR_SESS} based on the second LSB and the first MSB;
associate and store the second K_{NRR} with the ID of the second K_{NRR}, and the second K_{NRR_SESS} with the ID of the second K_{NRR_SESS}.

Optionally, the processing module 1301 is further configured to:
in response to the second security algorithm including a user plane encryption algorithm, generate a second NRREK for user plane encryption based on an ID of the user plane encryption algorithm and the second K_{NRR_SESS}.

Optionally, the transceiver module 1302 is further configured to:
receive a positioning service security policy sent by a network device, wherein the positioning service security policy includes a signaling security policy and a user plane security policy.

In this disclosure, the second terminal device can generate security keys for the positioning service upon receiving information sent by the first terminal device for generating the security context for the positioning service. Thus, reliable security protection for the positioning service can be achieved between the first terminal device and the second terminal device by reusing the existing PC5 direct communication link.

Please refer to Fig. 14, which is a block diagram of another communication device 1400 provided in an embodiment of the present disclosure. The communication device 1400 may be a terminal device, or may be a chip, a chip system, or a processor that supports the terminal device to implement the above methods. This device can be used to implement the methods described in the above method embodiments, which can be referred to in the description of the above method embodiments.

The communication device 1400 may include one or more processors 1401. The processor 1401 may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminal devices, terminal device chips, DU or CU, etc.), execute computer programs, and process data from computer programs.

Optionally, the communication device 1400 may also include one or more memories 1402, on which computer programs 1404 may be stored. The processor 1401 executes the computer programs 1404 to enable the communication device 1400 to perform the methods described in the above method embodiments. Optionally, the memory 1402 may also store data. The communication device 1400 and the memory 1402 can be set separately or integrated together.

Optionally, the communication device 1400 may also include a transceiver 1405 and an antenna 1406. The transceiver 1405 can be referred to as a transceiver unit, transceiver machine, or transceiver circuit, etc., used to achieve transceiver functions. The transceiver 1405 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 1400 may also include one or more interface circuits 1407. The interface circuit 1407 is used to receive code instructions and transmit them to the processor 1401. The processor 1401 executes the code instructions to cause the communication device 1400 to perform the method described in the above method embodiments.

The communication device 1400 is a first terminal device: the processor 1401 is used to execute step 201 in Fig. 2; step 404 and step 404 in Fig. 4; steps 504, 508 and 509 in Fig. 5; steps 606, 607, 610 and 611 in Fig. 6; and so on.

The communication device 1400 is a second terminal device: the transceiver 1405 is used to execute step 71 in Fig. 7; steps 801 and 802 in Fig. 8; steps 901, 902,904, 905 and 908 in Fig. 9; steps 1001, 1002, 1004, 1005 and 1008 in Fig. 10; steps 1101, 1102, 1103, 1105, 1106 and 1107 in Fig. 11, and so on.

In one implementation, the processor 1401 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1401 may store a computer program 1403 that runs on the processor 1401 and enables the communication device 1400 to perform the method described in the above method embodiments. The computer program 1403 may be fixed in the processor 1401, in which case the processor 1401 may be implemented by hardware.

In one implementation, the communication device 1400 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a remote terminal device, but the scope of the communication device described in this disclosure is not limited to this, and the structure of the communication device may not be limited by Fig. 14. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

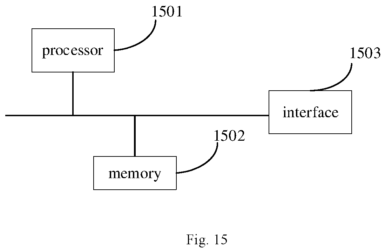

For the communication device that can be a chip or chip system, reference can be made to the schematic diagram of the structure of the chip shown in Fig. 15. The chip shown in Fig. 15 includes processors 1501 and interfaces 1503. The number of processors 1501 can be one or more, and the number of interfaces 1503 can be multiple.

For the case where the chip is used to implement the functions of the terminal device in embodiments of the present disclosure:
The processor 1501 is configured to execute step 201 in Fig. 2; steps 404 and 404 in Fig. 4; steps 504, 508 and 509 in Fig. 5; steps 606, 607, 610 and 611 in Fig. 6; and so on.

The interface 1503 is configured to execute step 71 in Fig. 7; steps 801 and 802 in Fig. 8; steps 901, 902,904, 905 and 908 in Fig. 9; steps 1001, 1002, 1004, 1005 and 1008 in Fig. 10; steps 1101, 1102, 1103, 1105, 1106 and 1107 in Fig. 11, and so on.

Optionally, the chip also includes a memory 1503 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, pre-stored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A direct communication method for a positioning service, performed by a first terminal device, the method comprising:
in response to determining sharing a unicast link communication root key KNRP with a second terminal device, sending a direct communication request message to the second terminal device, wherein the direct communication request message comprises information for generating a security context for the positioning service.

2. The method of claim 1, wherein the direct communication request message does not comprise the KNRP.

3. The method of claim 1, wherein the information for generating the security context for the positioning service comprises at least one of:
first key establishment information;
a first candidate security algorithm list supported by the first terminal device;
a first random number;
a first most significant bit (MSB) of an identifier (ID) of a first session root key K_{NRR_SESS}; or
a first candidate signaling security policy.

4. The method of claim 3, further comprising:
receiving a direct security mode command message sent by the second terminal device, wherein the direct security mode command message comprises second key establishment information, a second random number and a first security algorithm;
in response to the second key establishment information being matched with the first key establishment information, generating a first integrity key NRRIK for signaling integrity protection based on the second key establishment information, the second random number, the first random number and the first security algorithm.

5. The method of claim 4, wherein generating the first integrity key NRRIK for signaling integrity protection based on the second key establishment information, the second random number, the first random number and the first security algorithm comprises:
calculating a first root key K_{NRR} for the positioning service based on the second key establishment information and preset long term credentials;
generating the first session root key K_{NRR_SESS} based on the first root key K_{NRR}, the second random number and the first random number; and
generating the first integrity key NRRIK for signaling integrity protection based on the first session root key K_{NRR_SESS} and an ID of a signaling integrity algorithm contained in the first security algorithm.

6. The method of claim 5, wherein the preset long term credentials are the same as or different from long term credentials for generating the K_{NRR}.

7. The method of claim 4, further comprising:
in response to the first security algorithm comprising a signaling encryption algorithm, generating a first encryption key NRREK for signaling encryption based on the first session root key K_{NRR_SESS} and an ID of the signaling encryption algorithm.

8. The method of claim 4, wherein the direct security mode command message further comprises a second MSB of an ID of a second root key K_{NRR} and a second least significant bit (LSB) of an ID of a second K_{NRR_SESS}.

9. The method of claim 8, further comprising:
determining a first LSB of the ID of the first K_{NRR};
generating the ID of the first K_{NRR} based on the second MSB and the first LSB;
generating the ID of the first K_{NRR_SESS} based on the second LSB and the first MSB; and
associating and storing the first K_{NRR} with the ID of the first K_{NRR}, and the first K_{NRR_SESS} with the ID of the first K_{NRR_SESS}.

10. The method of claim 9, further comprising:
sending a direct security mode complete message to the second terminal device, wherein the direct security mode complete message comprises the first LSB and a first candidate user plane security policy;
receiving a direct communication accept message sent by the second terminal device, wherein the direct communication accept message contains a second security algorithm;
generating a first NRRIK for user plane integrity protection based on an ID of a user plane integrity algorithm contained in the second security algorithm and the first K_{NRR_SESS}.

11. The method of claim 10, further comprising:
in response to the second security algorithm comprising a user plane encryption algorithm, generating a first NRREK for user plane encryption based on an ID of the user plane encryption algorithm and the first K_{NRR_SESS}.

12. The method of any of claims 1-11, further comprising:
receiving a positioning service security policy sent by a network device, wherein the positioning service security policy comprises a signaling security policy and a user plane security policy.

13. The method of claim 11, wherein receiving the positioning service security policy sent by the network device comprises:
receiving configuration data of the positioning service security policy sent by a policy control function (PCF) network element through a control plane during a service authorization and information provision process; or,
receiving configuration data of the positioning service security policy sent by a directly discover name management function (DDNMF) network element during a discovery process; or,
receiving configuration data of the positioning service security policy sent by a prose key management function (PKMF) network element during a discovery process.

14. The method of claim 13, wherein the configuration data of the security policy comprises a signaling integrity protection parameter, a first selection parameter corresponding to signaling encryption protection, a user plane integrity protection parameter, and a second selection parameter corresponding to user plane encryption, wherein the first selection parameter is used to indicate whether the signaling encryption protection is required to be executed, and the second selection parameter is used to indicate whether the user plane encryption protection is required to be executed.

15. A direction communication method for a positioning service, performed by a second terminal device, the method comprising:
receiving a direct communication request message sent by a first terminal device, wherein the direct communication request message is sent by the first terminal device upon determining sharing a unicast link communication root key K_{NRP} with the second terminal device, and the direct communication request message comprises information for generating a security context for the positioning service.

16. The method of claim 15, wherein the direct communication request message does not comprise the K_{NRP}.

17. The method of claim 15, wherein the information for generating the security context for the positioning service comprises at least one of:
first key establishment information;
a first candidate security algorithm list supported by the first terminal device;
a first random number;
a first most significant bit (MSB) of an identifier (ID) of a first session root key K_{NRR_SESS}; or
a first candidate signaling security policy.

18. The method of claim 17, further comprising:
in response to the first key establishment information being matched with its own second key establishment information, determining a signaling security policy to be used based on its own second candidate signaling security policy and the first candidate signaling security policy;
determining a first security algorithm based on the signaling security policy to be used, a second candidate security algorithm list supported by itself, and the first candidate security algorithm list;
generating a second integrity key NRRIK for signaling integrity protection based on the first random number, a second random number generated by itself, and the first security algorithm;
sending a direct security mode command message to the first terminal device, wherein the direct security mode command message comprises the second key establishment information, the second random number, and the first security algorithm.

19. The method of claim 18, wherein generating the second integrity key NRRIK for signaling integrity protection based on the first random number, the second random number generated by itself, and the first security algorithm comprises:
calculating a second root key K_{NRR} for the positioning service based on the second key establishment information and preset long term credentials;
generating a second K_{NRR_SESS} based on the second K_{NRR}, the second random number, and the first random number;
generating the second NRRIK based on an ID of a signaling integrity algorithm contained in the first security algorithm and the second K_{NRR_SESS}.

20. The method of claim 19, wherein the preset long term credentials are the same as or different from long term credentials for generating the K_{NRR}.

21. The method of claim 19, further comprising:
in response to the first security algorithm comprising a signaling encryption algorithm, generating a second encryption key NRREK for signaling encryption based on the second K_{NRR_SESS} and an ID of the signaling encryption algorithm.

22. The method of claim 18, wherein the direct security mode command message further comprises a second MSB of an ID of a second root key K_{NRR} and a second least significant bit (LSB) of an ID of a second K_{NRR_SESS}.

23. The method of claim 18, further comprising:
receiving a direct security mode complete message sent by the first terminal device, wherein the direct security mode complete message comprises a first LSB of an ID of a first K_{NRR} and a first candidate user plane security policy;
determining a second security algorithm and a user plane security policy to be used based on its own second candidate user plane security policy and the first candidate user plane security policy;
generating a second integrity key for user plane integrity protection based on an ID of a user plane integrity algorithm contained in the second security algorithm and the second K_{NRR_SESS};
sending a direct communication accept message to the first terminal device, wherein the direct communication accept message contains the second security algorithm.

24. The method of claim 23, further comprising:
determining a second MSB of an ID of the second root key K_{NRR} and a second LSB of an ID of the second K_{NRR_SESS};
generating the ID of the second K_{NRR} based on the second MSB and the first LSB;
generating the ID of the second K_{NRR_SESS} based on the second LSB and the first MSB;
associating and storing the second K_{NRR} with the ID of the second K_{NRR}, and the second K_{NRR_SESS} with the ID of the second K_{NRR_SESS}.

25. The method of claim 23, further comprising:
in response to the second security algorithm comprising a user plane encryption algorithm, generating a second NRREK for user plane encryption based on an ID of the user plane encryption algorithm and the second K_{NRR_SESS}.

26. The method of any of claims 15-25, further comprising:
receiving a positioning service security policy sent by a network device, wherein the positioning service security policy comprises a signaling security policy and a user plane security policy.

27. A communication device, comprising:
a transceiver module, configured to sending a direct communication request message to a second terminal device, in response to determining sharing a unicast link communication root key K_{NRP} with the second terminal device, wherein the direct communication request message comprises information for generating a security context for the positioning service.

28. A communication device, comprising:
a transceiver module, configured to receive a direct communication request message sent by a first terminal device, wherein the direct communication request message is sent by the first terminal device upon determining sharing a unicast link communication root key K_{NRP} with the second terminal device, and the direct communication request message comprises information for generating a security context for the positioning service.

29. A communication device, comprising a processor and a memory, wherein the memory stores a computer program, and the processor is configured to execute the computer program stored in the memory to cause the device to implement the method of any of claims 1 to 14, or implement the method of any of claims 15 to 26.

30. A computer readable storage medium, stored with instructions which, when executed, cause the method of any of claims 1-14 to be implemented, or the method of any of claims 15-26 to be implemented.
